# DEMANDE DE BREVET EUROPEEN

(11) **EP 4 018 961 A1**
(43) Date de publication de la demande: **29.06.2022**
(21) Numéro de dépôt: 21215615.2
(22) Date de dépôt: 17.12.2021
(51) Int. Cl.: A61C 1/08, A61C 8/00

(54) **DISPOSITIF DE GUIDAGE POUR LA POSE D'IMPLANT MAXILLO-ZYGOMATIQUE**

(30) Priorité: 23.12.2020 FR 2014095
(71) Demandeur: Scortecci, Gérard, 06000 Nice (FR)
(72) Inventeur: Scortecci, Gérard, 06000 Nice (FR)
(74) Mandataire: Brizio Delaporte, Allison

(57) **Abrégé**

L'invention concerne un dispositif de guidage pour la pose d'implant dentaire comprenant un arbre (1), une première branche (2) distale et une deuxième branche (3) proximale comprenant chacune une base montée sur l'arbre (1), caractérisé en ce que
• la première branche (2) comprend :
- à une extrémité (4) opposée à sa base une première ouverture (8), et
- un canon de butée (9) inséré dans la première ouverture (6), le canon de butée (9) comprend un trou central qui présente une embouchure crantée (12) destinée à être appliquée contre une première surface osseuse (32), et une surface de butée opposée à l'embouchure crantée (12),

• la deuxième branche (3) comprend :
- à une extrémité (5) opposée à sa base, une deuxième ouverture cylindrique (6), et
- un canon de guidage (7) comprenant un trou central débouchant.

L'invention concerne le domaine de la chirurgie dentaire et plus particulièrement de la pose d'implant dentaire, notamment d'implant maxillo-zygomatique.

## Description

### DOMAINE TECHNIQUE DE L'INVENTION

La présente invention concerne le domaine de la chirurgie dentaire et plus particulièrement de la pose d'implant dentaire. Elle trouve pour application particulièrement avantageuse la pose d'implant dentaire maxillo-zygomatique.

### ETAT DE LA TECHNIQUE

Les implants dentaires destinés à remplacer la racine d'une dent et sur lesquels un ensemble prothétique est monté pour remplacer la dent sont connus depuis de nombreuses années. De nombreux implants et ensembles prothétiques existent sur le marché et notamment des implants maxillo-zygomatiques qui s'adressent aux patients qui n'ont plus de dents au niveau du maxillaire et qui n'ont pas suffisamment de tissu osseux pour envisager des implants dentaires sans greffe osseuse.

Les implants maxillo-zygomatiques, cylindriques et/ou cylindro-coniques sont insérés dans l'os zygomatique, un tissu osseux qui ne se résorbe pas même dans les cas les plus extrêmes et qui permet un ancrage de qualité pour notamment la pose immédiate d'une prothèse dentaire fixe.

Toutefois, la pose de ce type d'implant n'est pas anodine. Une des singularités qui caractérise les difficultés opératoires des implants maxillo-zygomatiques est la traversée d'espaces anatomiques « vides » tels que le sinus maxillaire ou la zone extra maxillaire. Pendant tous ces trajets, le chirurgien ne dispose d'aucun élément anatomique intra-osseux pouvant assurer le guidage du foret zygomatique puis de l'implant maxillo-zygomatique lui-même.

Le forêt puis l'implant maxillo-zygomatique tournent dans le vide pendant plusieurs millimètres, de quelques millimètres jusqu'à 20 millimètres, voire plus, avant d'atteindre la zone d'ancrage apical zygomatique.

Lors de cette traversée extra maxillaire et/ou intra sinusienne, le sinus est une cavité vide, le chirurgien ne dispose d'aucun guidage anatomique naturel ni pour le foret zygomatique, ni pour l'implant maxillo-zygomatique. Ce qui pose un problème majeur au niveau de la sécurité et de l'efficacité de l'opération.

Concernant la pose d'implants maxillo-zygomatiques, les tentatives de guidage numérique physique et/ou satellitaire n'ont à ce jour pas atteint leurs objectifs de précision et de reproductibilité pour être validés de façon routinière par les praticiens spécialisés en la matière.

De nombreux cas de fausses routes ont été décrits dans la littérature.

De fait, cette chirurgie est entièrement dépendante du praticien, car elle se pratique majoritairement à main levée. Le moindre dérapage du foret zygomatique peut entrainer des problèmes majeurs chez les patients concernés tels que des perforations du plancher de l'orbite avec perte du globe oculaire, perforation crânienne.

Il existe donc le besoin de proposer une solution pour sécuriser la pose d'implant maxillo-zygomatique.

Un objet de la présente invention est donc de proposer un dispositif permettant une mise en place efficace desdits implants, et en toute sécurité.

Les autres objets, caractéristiques et avantages de la présente invention apparaîtront à l'examen de la description suivante et des dessins d'accompagnement. Il est entendu que d'autres avantages peuvent être incorporés.

### RESUME DE L'INVENTION

Pour atteindre cet objectif, selon un mode de réalisation on prévoit un dispositif de guidage pour la pose d'implant dentaire, préférentiellement maxillo-zigomatique, comprenant un arbre présentant un axe longitudinal, une première branche distale et une deuxième branche proximale comprenant chacune une base montée sur l'arbre, préférentiellement la première branche et la deuxième branche sont, au moins, au niveau de leur base, parallèles entre elles et préférentiellement s'étendent dans une direction transversale préférentiellement perpendiculaires, à l'axe longitudinal, caractérisé en ce que
- la première branche distale comprend :
   - à une extrémité opposée à sa base une première ouverture parallèle à l'axe longitudinal, et
   - un canon de butée, pouvant être amovible, inséré dans la première ouverture, le canon de butée comprend un trou central qui présente une embouchure crantée destinée à être appliquée contre une première surface osseuse, préférentiellement la première surface osseuse est l'os zygomatique, et une surface de butée opposée à l'embouchure crantée , le canon de butée étant au moins configuré pour recevoir l'extrémité distale d'un foret, et/ou éventuellement un implant dentaire,
- La deuxième branche proximale comprend
   - à une extrémité opposée à sa base, une deuxième ouverture cylindrique parallèle à l'axe longitudinal, et
   - un canon de guidage, pouvant être amovible, comprenant un trou central débouchant, le canon de guidage étant monté mobile selon l'axe longitudinal dans la deuxième ouverture cylindrique, le canon de guidage comprenant une première embouchure comprenant une virole, et une deuxième embouchure destinée à être appliquée, directement ou indirectement par l'intermédiaire d'au moins une pièce, contre une deuxième surface osseuse 33, préférentiellement la deuxième surface osseuse 33 est l'os maxillaire, le canon de guidage étant au moins configuré pour recevoir un foret, éventuellement et/ou un implant dentaire et/ou un guide de forage,
et dans lequel l'embouchure crantée du canon de butée et la deuxième embouchure du canon de guidage se font face et le trou central du canon de guidage et le trou central du canon de butée s'étendent suivant un même axe parallèle à l'axe longitudinal.

Ainsi, le dispositif selon l'invention assure un puissant verrouillage endo-osseux préférentiellement dans l'os zygomatique et avantageusement simultanément dans l'os maxillaire qui garantit l'immobilisation absolue du dispositif lors du passage du foret chirurgical qui traverse le dispositif en tournant sur lui-même entrainé par un micromoteur. Le présent dispositif élimine tout risque de dérapage du foret F lorsqu'il progresse dans le vide en mode extra- maxillaire et/ou intra sinusien.

En particulier, le chirurgien peut alors forer dans l'os maxillaire jusqu'à l'os zygomatique à travers le canon de guidage et le canon de butée en toute sécurité. Les axes du canon de guidage 14 et du canon de butée 7 sont alignés et le restent pendant toute l'opération de forage et préférentiellement de mise en place de l'implant, car ils sont maintenus dans un cadre rigide ostéo ancré défini par la première branche, la deuxième branche, avantageusement dont au moins l'une et préférentiellement les deux sont munies de crans ou dents intra-osseux, et l'arbre. Ce dispositif avec ce cadre rigide prend en étau l'os zygomatique et l'os maxillaire ce qui garantit une immobilisation absolue du dispositif pendant l'opération.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente une vue en perspective du dispositif de guidage selon un premier mode de réalisation.
La figure 2 représente une vue du dispositif de guidage selon la figure 1 vue depuis la poignée.
La figure 3 représente une vue en coupe AA du dispositif de guidage selon la figure 2.
La figure 4 représente une vue en perspective éclatée du dispositif de guidage selon le premier mode de réalisation.
Les figures 5 et 6 représentent une vue en perspective du dispositif de guidage selon le premier mode de réalisation dans deux positions, figure 5 position serrée et figure 6 position écartée.
La figure 7 représente une vue en perspective du dispositif de guidage selon un deuxième mode de réalisation.
La figure 8 représente une vue de détail en coupe du montage sur la deuxième branche proximale selon la figure 7.
La figure 9 représente une vue de détail en perspective éclatée selon la figure 7.

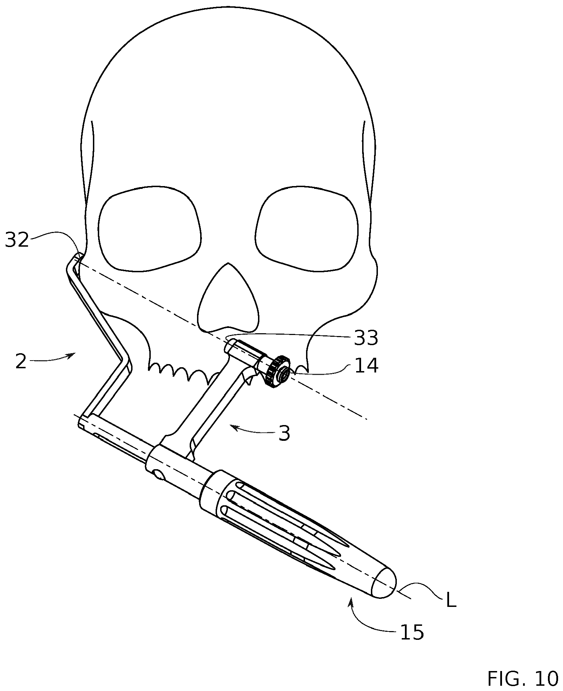

La figure 10 représente une vue en perspective du dispositif de guidage selon le premier mode de réalisation en utilisation pour au moins un forage pour implant maxillo-zygomatique.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
Selon un exemple, le dispositif est configuré pour faire varier l'écartement entre la première branche 2 et la deuxième branche 3.

Selon un exemple, la première branche 2 distale est montée fixe par sa base sur l'arbre 1.

Selon un exemple, la deuxième branche 3 proximale est montée à translation par sa base sur l'arbre 1.

Selon un exemple, le dispositif comprend un guide de forage 14 comprenant un trou central débouchant configuré pour s'insérer dans le trou central du canon de guidage 7 et destiné à recevoir le foret 34, le trou central du guide de forage 14 s'étend suivant un même axe que le trou central du canon de butée 9 et que le trou central débouchant du canon de guidage 7, qui est parallèle à l'axe longitudinal L.

Selon un exemple, la deuxième ouverture 6 comprend une surface interne comprenant un filet interne destiné à coopérer avec un filet externe agencé à la surface externe du canon de guidage 7 pour assurer un déplacement hélicoïdal du canon de guidage 7 dans la deuxième ouverture (6) de sorte que la deuxième embouchure 11 soit plus ou moins en saillie de la deuxième ouverture 6.

Selon un exemple, la première branche 2 distale présente une première extension 35 comprenant une composante non nulle suivant une direction transversale à l'axe longitudinal L. La direction transversale à l'axe longitudinal étant préférentiellement perpendiculaire à l'axe longitudinal. Préférentiellement, la première extension est constituée d'une composante non nulle suivant une direction transversale à l'axe longitudinal.

Selon un exemple, la première branche 2 distale comprend une deuxième extension 36 comprenant une composante non nulle suivant une direction transversale à l'axe longitudinal L et une composante non nulle suivant l'axe longitudinal L, et avantageusement une troisième extension 37 s'étendant depuis la deuxième extension comprenant une composante non nulle suivant une direction transversale à l'axe longitudinal L, préférentiellement la première extension 35 étant parallèle à la troisième extension 37.

Selon un exemple, le canon de butée 9 comprend une première portion 28 d'un premier diamètre et une deuxième portion 29 d'un deuxième diamètre, le premier diamètre étant inférieur au deuxième diamètre, la première portion 28 étant destinée à s'insérer dans la première ouverture 8 de la première branche 2 et la deuxième portion 28 étant destinée à être agencée à l'extérieur de la première ouverture 8 de la première branche 2, la première portion 28 et la deuxième portion 29 étant reliées par une jonction configurée pour être en contact de la première branche 2.

Selon un exemple, le canon de guidage 7 comprend un cylindre s'étendant entre la virole 10 et la deuxième embouchure 11 dont la longueur est configurée pour que la deuxième embouchure 11 et la virole 10 d'être agencées de part et d'autre de la deuxième ouverture 6.

Selon un exemple, le canon de guidage 7 comprend à sa deuxième embouchure 11 des dents 27 destinées à assurer un ancrage dans la deuxième surface osseuse 33.

Selon un exemple, le dispositif comprenant une plaque d'appui extra maxillaire 22 comprend un passage 26 configuré pour recevoir la deuxième embouchure 11 du canon de guidage 7 de sorte à assurer une surface d'appui plan sur la deuxième surface osseuse 33.

Selon un exemple, la plaque d'appui extramaxillaire 22 comprend des dents destinées à assurer un ancrage dans la deuxième surface osseuse 33.

Selon un exemple, le dispositif comprend une bague de protection 23 et dans lequel le canon de guidage 7 comprend à sa deuxième embouchure 11 un premier épaulement 24 d'un premier diamètre destiné à recevoir le passage 26 de la plaque d'appui extramaxillaire 22 et un deuxième épaulement 25 d'un deuxième diamètre destiné à recevoir la bague de protection 23, le premier diamètre étant supérieur au deuxième diamètre.

Il est précisé que dans le cadre de la présente invention, le terme distal s'entend de la partie la plus éloignée du chirurgien tandis que le terme proximal s'entend de la partie la plus proche du chirurgien.

On entend par chirurgien, la personne manipulant le dispositif selon l'invention, il peut également être dénommé praticien ou manipulateur.

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

Le dispositif selon l'invention est un dispositif pour la pose d'implant dentaire. On entend par pose que le dispositif est destiné au moins au forage osseux en vue de la mise en place d'un implant dentaire, préférentiellement le forage se fait dans un os de la tête, plus particulièrement de la mâchoire. Avantageusement, le dispositif est également destiné à la mise en place de l'implant dentaire. En particulier, le dispositif est un dispositif de guidage pour le perçage de l'os et l'insertion d'un implant dentaire.

Le dispositif de guidage comprend un arbre 1 sur lequel sont montées par leur base une première branche 2 et une deuxième branche 3.

L'arbre 1 comprend un axe longitudinal L. la direction transversale à l'axe longitudinal s'entend comme une direction comprenant une composante non nulle transversale à l'axe longitudinal L. Préférentiellement, la direction transversale est perpendiculaire à l'axe longitudinal L.

Avantageusement, la première branche 2 et la deuxième branche 3 s'étendent dans un même plan et préférentiellement dans le plan de l'arbre 1.

La première branche 2 comprend une base par laquelle la première branche 2 est montée sur l'arbre 1. La première branche 2 s'étend avantageusement suivant une direction comprenant une composante non nulle suivant la direction transversale à l'axe longitudinal L.

La première branche 2 comprend une extrémité 4 opposée à la base, préférentiellement libre. La première branche 2 comprend une première ouverture 8. Préférentiellement, la première ouverture 8 s'étend suivant un axe parallèle à l'axe longitudinal L de l'arbre 1. Avantageusement, la première ouverture 8 traverse de part en part la première branche 2, la première ouverture 8 est débouchante à ses deux extrémités. Selon une possibilité, la première ouverture 8 peut n'être débouchante qu'à une extrémité, à son extrémité proximale c'est-à-dire l'extrémité faisant face au chirurgien en utilisation, plus précisément faisant face à la deuxième branche 3. La première ouverture 8 présente un pourtour d'une forme pouvant être un cercle, une ellipse ou encore un polygone.

Selon un mode de réalisation, le dispositif comprend un canon de butée 9 configuré pour être inséré au moins partiellement dans la première ouverture 8. Avantageusement, la première ouverture 8 est configurée pour coopérer avec la surface externe du canon de butée 9. Le canon de butée 9 comprend un trou central comprenant une surface de butée assurant le rôle de butée, au moins d'une extrémité distale d'un foret 34 et éventuellement également d'une extrémité distale d'un implant dentaire préférentiellement maxillo-zygomatique. Cette surface de butée va permettre de bloquer le foret 34 en fin de course sans risque de dépassement iatrogène qui constitue une source potentielle de grave accident. Cette disposition constitue un élément de sécurité avantageux du dispositif.

La surface de butée est par exemple formée par une extrémité borgne 13 du canon de butée 9. La surface de butée est avantageusement formée à l'intérieur du trou central. Le trou central du canon de butée 9 comprend une embouchure crantée 12 destinée à s'appliquer sur une première surface osseuse 32, préférentiellement les crans de l'embouchure assurent un ancrage dans la première surface osseuse 32. Selon une application préférée, la première surface osseuse 32 est constituée par l'os zygomatique, plus précisément l'arcade zygomatique. La surface de butée et l'embouchure crantée 12 sont opposées. Préférentiellement, la surface de butée est distante de l'embouchure crantée 12 par une distance configurée pour assurer un guidage, au moins de l'extrémité du foret 34, voire avantageusement de l'extrémité distale d'un implant dentaire.

Selon une possibilité, le canon de butée 9 comprend une première portion 28 d'une première dimension transversale et une deuxième portion 29 d'une deuxième dimension transversale, la première dimension transversale étant inférieure à la deuxième dimension transversale. La première portion 28 s'étend depuis l'extrémité opposée à l'embouchure crantée 12 pouvant être une extrémité borgne 13 jusqu'à la deuxième portion 29 et la deuxième portion 29 s'étend depuis l'extrémité crantée 12 jusqu'à la première portion. La première dimension transversale de la première portion 28 est configurée pour que la première portion 28 s'insère dans la première ouverture 8. Avantageusement, la première ouverture 8 est configurée pour coopérer avec la surface externe de la première portion 28. La deuxième dimension transversale de la deuxième portion 29 est configurée pour que la deuxième portion 29 soit en butée contre la première branche 2. La deuxième portion 29 est agencée en saillie de la première ouverture 8, préférentiellement en saillie proximale. La première portion 28 et la deuxième portion 29 sont avantageusement reliées par une jonction configurée pour être en butée sur le pourtour de la première ouverture 8. La surface de butée du canon de guidage 9 peut être avantageusement formée au niveau de la jonction entre la première portion 28 et la deuxième portion 29.

La première ouverture 8 comprend une surface interne configurée pour coopérer avec la surface externe d'au moins une partie du canon de butée 9, plus précisément avec la surface externe de la première portion 28.

Préférentiellement, la première portion 28 est distale relativement à la deuxième portion 29 qui est distale relativement à la première portion 28.

Le canon de butée 9 est avantageusement amovible de sorte à pouvoir être adapté à la taille du foret 34 à recevoir et/ou de l'implant à poser. Cela assure également une stérilisation du dispositif.

Selon un mode de réalisation, la première branche 2 comprend une première extension 35 s'étendant depuis la base et comprenant une composante non nulle suivant la direction transversale. Préférentiellement, la première extension 35 s'étend uniquement suivant la direction transversale. Préférentiellement, la première branche 2 comprend une deuxième extension 36 s'étendant depuis la première extension 35. La deuxième extension 36 comprend une composante non nulle suivant la direction transversale et une composante non nulle suivant l'axe longitudinal L. Préférentiellement, la deuxième extension 36 ne s'étend pas suivant la direction transversale. Préférentiellement, la première branche 2 comprend une troisième extension 37 s'étendant depuis la deuxième extension 36. La troisième extension 37 comprend une composante non nulle suivant la direction transversale. Préférentiellement, la troisième extension 37 s'étend uniquement suivant la direction transversale. La deuxième branche 2 est avantageusement configurée pour permettre un positionnement optimal du dispositif de sorte à suivre les contours anatomiques de la mâchoire et de la joue de sorte à atteindre la première surface osseuse 32 sur laquelle l'embouchure crantée 12 du canon de butée 9 vient s'appliquer.

La deuxième branche 3 comprend une base par laquelle la deuxième branche 3 est montée sur l'arbre 1. La deuxième branche 3 comprend une extrémité 5 opposée à la base, préférentiellement libre. La deuxième branche 3 comprend une deuxième ouverture cylindrique 6. Préférentiellement, la deuxième ouverture 6 s'étend suivant un axe parallèle à l'axe longitudinal L de l'arbre 1. Avantageusement, la deuxième ouverture cylindrique 6 traverse de part en part la deuxième branche 3, la deuxième ouverture 6 est débouchante à ses deux extrémités.

Selon un mode de réalisation, le dispositif comprend un canon de guidage 7 configuré pour être inséré au moins partiellement dans l'ouverture cylindrique 6. Le canon de guidage 7 comprend une surface externe cylindrique destinée à coopérer avec la deuxième ouverture cylindrique 6. Plus précisément, le canon de guidage 7 est monté mobile selon l'axe longitudinal L dans la deuxième ouverture 6. Préférentiellement, le canon de guidage 7 comprend à sa surface externe un filet externe et la deuxième ouverture 6 comprend un filet interne, le filet interne et le filet externe étant configurés pour assurer un déplacement hélicoïdal au canon de guidage. Le filet interne de la deuxième ouverture 6 peut être rentrant ou saillant tandis que le filet externe du canon de guidage 7 peut être saillant ou rentrant, le filet interne et le filet externe étant complémentaires.

Le canon de guidage 7 comprend un trou central débouchant. Le trou central traverse de part en part le canon de guidage 7.

Le canon de guidage 7 comprend une première embouchure portant une virole 10. La virole 10 est avantageusement de diamètre supérieur à celui de la deuxième ouverture 6, si bien que la virole 10 est configurée pour limiter le déplacement selon l'axe longitudinal L du canon de butée 7 dans la deuxième ouverture 6 en venant en butée contre le pourtour de la deuxième ouverture 6, avantageusement sur son pourtour proximal. La virole 10 est avantageusement configurée pour faciliter sa manipulation en rotation par le chirurgien pour permettre le déplacement hélicoïdal du canon de guidage 7.

Le canon de guidage comprend une deuxième embouchure 11 destinée à être appliquée sur une deuxième surface osseuse 33. Préférentiellement, la deuxième embouchure 11 est opposée à la première embouchure et donc à la virole 10. Selon une application préférée, la deuxième surface osseuse 33 est constituée par l'os maxillaire, plus précisément par l'arcade maxillaire.

Le canon de guidage comprend un cylindre s'étendant entre la virole 10 et la deuxième embouchure 11. Le cylindre du canon de guidage 7 présente une longueur supérieure à la longueur de la deuxième ouverture 6 de sorte que la première embouchure, c'est-à-dire la virole 10, et la deuxième embouchure 11 soient en saillie de part et d'autre de la deuxième ouverture 6.

La mobilité du canon de guidage 7 dans la deuxième ouverture 6 permet grâce à la virole 10 de contrôler la saillie de la deuxième embouchure 11 hors de la deuxième ouverture 6.

Avantageusement, la virole 10 est plus proximale que la deuxième embouchure 11. Préférentiellement, la deuxième embouchure 11 fait face à l'embouchure crantée 12 du canon de butée 9.

Ainsi, la deuxième embouchure 11 et l'embouchure crantée 12 assurent un serrage, une prise en étau d'une partie de l'os de la mâchoire permettant d'assurer un guide sécurisé pour le forage et la mise en place de l'implant dentaire.

Préférentiellement, le canon de guidage 7 est amovible pour être adapté au foret 34 et/ou à un implant dentaire et/ou à un guide de forage 14 et optimiser la stérilisation du dispositif.

Le canon de guidage 7 est avantageusement configuré pour guider au moins un foret 34, directement ou par indirectement par un guide de forage 14, pour la perforation osseuse en vue de la mise en place d'un implant dentaire et avantageusement pour guider la mise en place de l'implant dentaire.

Pour assurer le guidage, le canon de guidage 7 doit permettre de définir une direction de forage précise sans risque de débattement.

Selon une possibilité préférée, le dispositif comprend un guide de forage14. Le guide de forage 14 comprend un trou central débouchant traversant de part en part le guide de forage 14. Le guide de forage 14 est configuré pour coopérer avec sa surface externe avec le trou central débouchant du canon de guidage 7 et avantageusement par sa surface interne avec le foret 34. Le trou central est avantageusement cylindrique. Avantageusement, le diamètre du trou central du guide de forage 14 est très proche du diamètre du foret 34, préférentiellement à 1/100 de millimètre, pour assurer un guidage optimal. Avantageusement, le diamètre de la surface externe du guide de forage 14 est configuré pour permettre le coulissement du guide de forage 14 dans le canon de guidage 7. À titre d'exemple, un écart de 1/100 de millimètre entre les surfaces cylindriques du canon de guidage 7 et du guide de forage 14 assure la précision de la pose de l'implant dentaire maxillo-zygomatique et plus précisément le forage osseux. Le guide de forage 14 comprend avantageusement une butée proximale 30 limitant l'insertion du guide de forage 14 dans le canon de guidage 7. Avantageusement, la butée proximale 30 vient en butée contre la virole 10.

Le guide de forage 14 est avantageusement amovible pour être adapté à la taille du foret 34 et pour pouvoir être retiré après la perforation et permettre la mise en place de l'implant directement par le guidage du canon de guidage 7.

Le guide de forage 14 présente avantageusement une longueur configurée pour assurer un guidage sans dérive angulaire du foret 34. À titre d'exemple, la longueur du guide de forage 14 est de l'ordre de 20mm.

Selon l'invention, le trou central du canon de butée 9 et le trou central débouchant du canon de guidage 7 s'étendent suivant un même axe parallèle à l'axe longitudinal L. Préférentiellement, le trou central débouchant du guide de forage 14 s'étend suivant ce même axe parallèle à l'axe longitudinal L.

La mise en place du dispositif est facilitée pour le chirurgien qui permet de visualiser l'axe de perforation comme parallèle à l'axe longitudinal L de l'arbre 1.

L'embouchure crantée 12 du canon de butée 9 et la deuxième embouchure 11 du canon de guidage 7 se font face. Assurant, ainsi un guidage selon l'axe longitudinal L au moins d'un foret 34 et avantageusement également d'un implant dentaire.

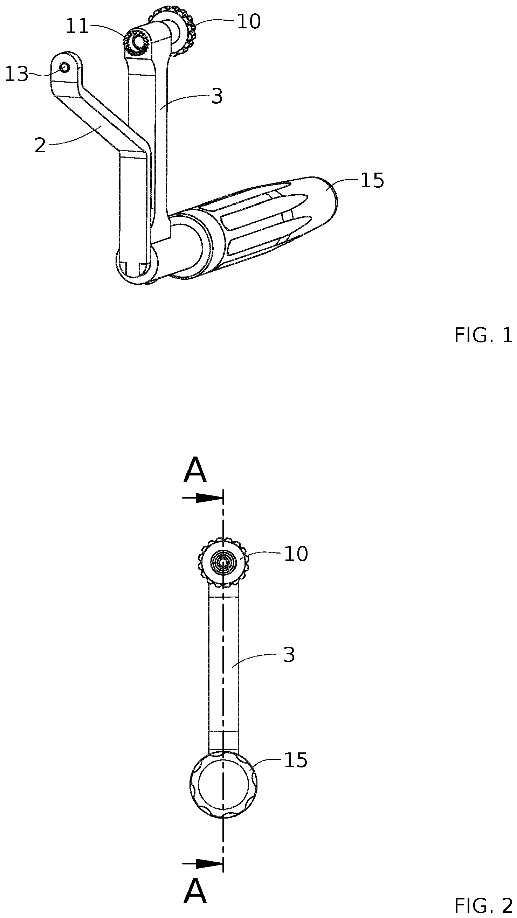

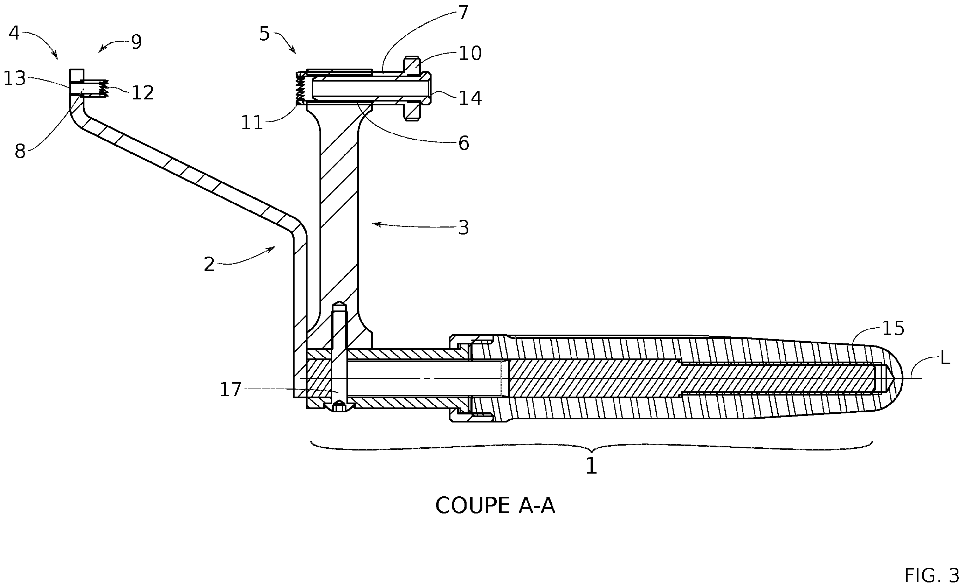

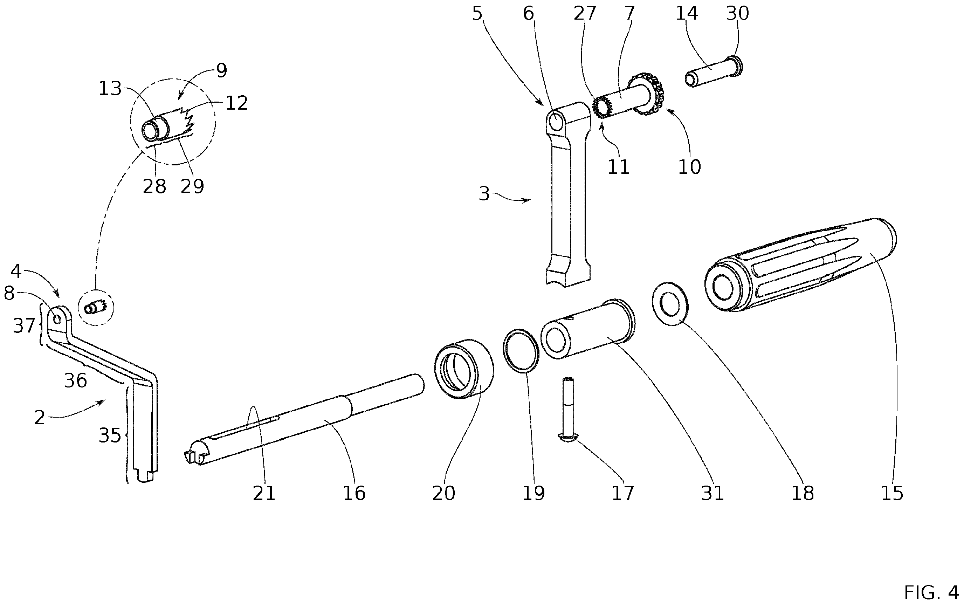

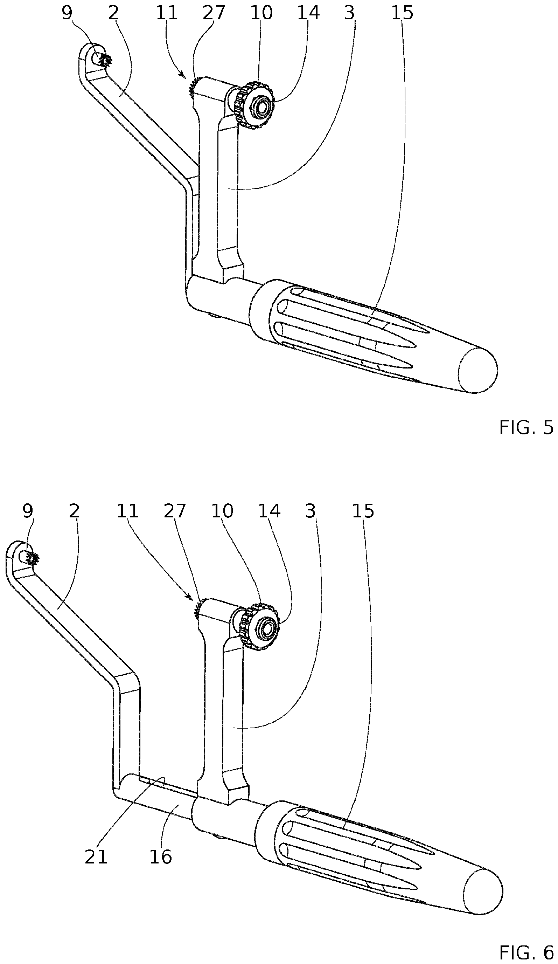

Selon un premier mode de réalisation illustré aux figures 1 à 6, la deuxième embouchure 11 comprend des dents 27 destinées à s'appliquer sur la deuxième surface osseuse 33, préférentiellement les dents 27 assurent un ancrage dans la deuxième surface osseuse 33.

La deuxième embouchure 11 comprenant des dents 27 est avantageusement auto forante. Lors de l'avancée du canon de guidage 7 selon un mouvement hélicoïdal, la deuxième embouchure 11 avec les dents 27 agit comme un ostéotome manuel en pénétrant dans la surface osseuse notamment dans l'os maxillaire à la manière d'un trépan. Le canon de guidage 7 agit comme une micro scie circulaire intra-osseuse actionnée par la virole solidaire.

Le canon de guidage 7 muni de dents 27 à son extrémité d'appui sur la deuxième surface osseuse 33, préférentiellement l'os maxillaire, progresse dans celui-ci de façon micro métrique à la manière d'un trépan endosseux la virole 10 est activée en rotation. Cette ostéotomie intra maxillaire réalisée par l'extrémité crantée du canon 7 se fait de façon univoque grâce à la coopération du filet externe situé sur le cylindre (7) avec le filet interne du cylindre (6) de la deuxième ouverture.

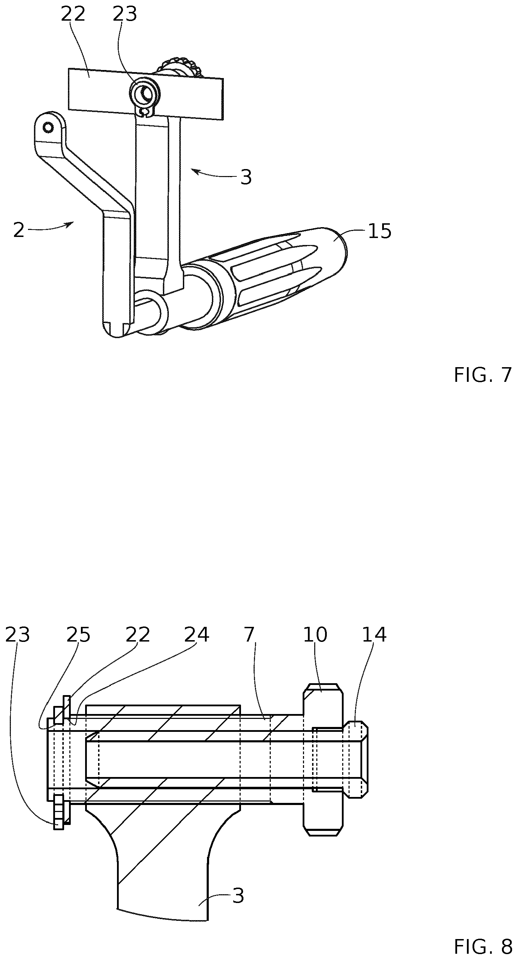

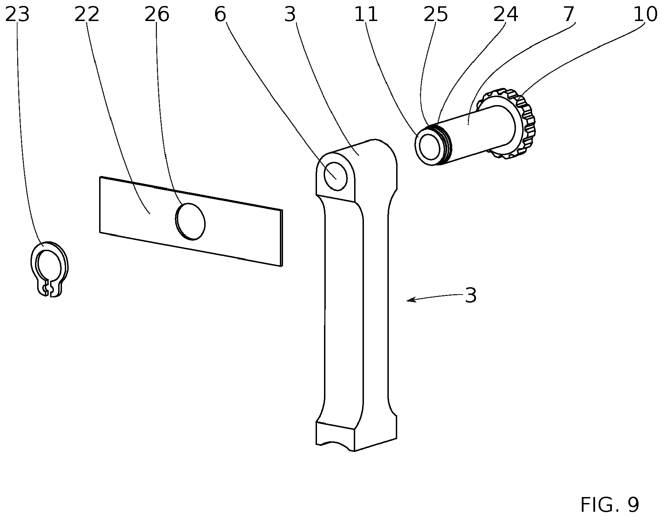

Selon un deuxième mode de réalisation illustré aux figures 7 à 9, la deuxième embouchure 11 comprend un premier épaulement 24 et un deuxième épaulement 25. Le premier épaulement 24 présente un premier diamètre et le deuxième épaulement 25 présente un deuxième diamètre. Le premier épaulement 24 et le deuxième épaulement 25 sont juxtaposés. Le premier épaulement 24 est plus distal que le deuxième épaulement 25 qui est plus proximal. Le premier diamètre est inférieur au deuxième diamètre, c'est-à-dire que le deuxième épaulement 25 est moins profond que le premier épaulement 24. Selon ce deuxième mode de réalisation, le dispositif de guidage comprend une plaque d'appui extra-maxillaire 22. La plaque d'appui extra-maxillaire 22 est destinée à augmenter la surface d'appui du canon de guidage 7. La plaque d'appui est par exemple de forme parallélépipédique. Ce deuxième mode de réalisation permet dans rares situations quand l'appui osseux maxillaire fait défaut par exemple en cas de cancer ayant entrainé une maxillectomie de pouvoir tout de même assurer un appui extra maxillaire. La plaque assure un appui sur le rebord de la maxillectomie contre les parois du maxillaire ouvert. Préférentiellement, la plaque 22 est configurée pour assurer un ancrage endo-osseux de la branche 3. Selon une possibilité, non représentée, la plaque d'appui extra maxillaire 22 peut recevoir, par exemple à chacune de ses extrémités, des dents perpendiculaires à la surface de la plaque 22, de façon à assurer un effet de crampons sur les bords osseux du maxillaire résiduel réséqué lors notamment de cancer du maxillaire traité par maxillectomie partielle.

La plaque 22 comprend un passage 26. Avantageusement, le passage 26 est un trou cylindrique configuré pour recevoir le canon de guidage 7. Le passage 26 est avantageusement formé au centre de gravité de la plaque 22. Préférentiellement, le passage 26 présente un diamètre supérieur au deuxième diamètre du deuxième épaulement 25, mais inférieur au diamètre du canon de guidage 7 de sorte que la plaque 22 vient de loger dans le deuxième épaulement 25. Avantageusement, le dispositif comprend une bague de serrage 23 configurée pour se loger dans le premier épaulement 24. La bague de serrage 23 assure le maintien en position de la plaque 22 dans deuxième épaulement 25.

Avantageusement, le dispositif selon l'invention est configuré pour assurer un ancrage endo-osseux sur la première surface osseuse 32 et sur la deuxième surface osseuse 33. A cet effet, la deuxième branche 3 est avantageusement configurée pour assurer cet ancrage endo-osseux quel que soit le mode de réalisation selon l'invention. La deuxième branche 3 comprend des dents assurant un ancrage endo-osseux dans la deuxième surface osseuse 33, les dents sont par exemple agencées sur la deuxième embouchure 11 du canon de guidage 7 ou sur la plaque 22 si celle-ci est présente.

Avantageusement, l'arbre 1 comprend une poignée 15 destinée à être saisie par le praticien. La poignée 15 est avantageusement agencée à l'extrémité proximale de l'arbre 1 et avantageusement de manière opposée à la première branche 2.

Le dispositif comprend des moyens configurés pour faire varier l'écartement de la première branche 2 et de la deuxième branche 3. Selon une possibilité, au moins une branche est mobile relativement à l'autre. Selon le mode de réalisation illustré aux figures, la première branche 2 est montée fixe sur l'arbre 1, préférentiellement à une extrémité distale de celui-ci. La deuxième branche 3 est montée mobile à translation sur l'arbre 1. Au moins une des deux branches est mobile selon l'axe longitudinal L. L'arbre 1 comprend avantageusement une surface de guidage en translation de la base d'au moins une des branches 2, 3. À titre d'exemple, l'arbre 1 comprend une glissière 21 guidant en translation un doigt 17.

Selon une possibilité, l'arbre 1 comprend une tige 17 recevant la glissière 21 et à son extrémité distale la première branche 2 et avantageusement à son extrémité proximale la poignée 15. La tige 16 est configurée pour coulisser dans un manchon 31.

L'écartement des deux branches 2, 3 est avantageusement progressif et contrôlé par le chirurgien aux moyens d'organes de contrôle de l'écartement des deux branches 2, 3. De plus, l'écartement une fois défini est sécurisé par le doigt 17 évitant tout risque de déplacement en cours de pose de l'implant dentaire.

Le foret 34 utilisable avec le dispositif de l'invention est avantageusement entrainé en rotation par un micromoteur.

Selon un aspect, l'invention comprend un procédé d'utilisation d'un dispositif de guidage selon l'invention. Le procédé comprend les étapes successives suivantes pour la phase de mise en place du dispositif avant la pose de l'implant, c'est-à-dire le forage et la mise en place de l'implant:
- positionnement de l'embouchure crantée 12 en appui d'une première surface osseuse 32, préférentiellement la première surface osseuse 32 étant un os ou une arcade zygomatique,
- positionnement de la deuxième embouchure 11 en appui d'une deuxième surface osseuse 33, préférentiellement la deuxième surface osseuse 33 étant un os ou une arcade maxillaire. Préférentiellement, pour le positionnement de cette deuxième embouchure, la deuxième branche 3 est écartée ou rapprochée de la première branche 2 préférentiellement par un déplacement suivant l'axe longitudinal L.

Selon une possibilité, le procédé comprend le serrage de l'ancrage de la deuxième embouchure 11 par actionnement de la virole 10, entrainant la deuxième embouchure 11 suivant un déplacement hélicoïdal suivant l'axe longitudinal L préférentiellement en direction distale. Si la deuxième embouchure 11 comprend des dents 27 celles-ci pénètrent dans la surface osseuse optimisant l'ancrage du dispositif.

Le procédé d'utilisation d'un dispositif de guidage comprend avantageusement une phase de retrait du dispositif préférentiellement après la pose de l'implant, c'est-à-dire le forage et la mise en place de l'implant comprenant les étapes successives suivantes
- desserrage de l'ancrage de la deuxième embouchure 11 par actionnement de la virole 10, entrainant la deuxième embouchure 11 suivant un déplacement hélicoïdal suivant l'axe longitudinal L préférentiellement en direction proximale,
- retrait de la deuxième embouchure 11 en appui d'une deuxième surface osseuse 33. Préférentiellement, pour le retrait de cette deuxième embouchure 11, la deuxième branche 3 est écartée de la première branche 2 préférentiellement par un déplacement suivant l'axe longitudinal L,
- retrait de l'embouchure crantée 12 en appui d'une première surface osseuse 32.

Selon un aspect, l'invention concerne un procédé de pose d'implant comprenant les étapes successives suivantes pour le forage osseux:
- insertion d'un foret 34 dans le canon de guidage 7, préférentiellement dans le guide de forage 14,
- perforation de l'os jusqu'à ce que l'extrémité distale du foret 34 soit en butée contre la surface de butée du canon de butée 9. Préférentiellement, retrait du foret 34.

Préférentiellement, le procédé comprend les étapes successives suivantes pour la mise en place de l'implant dentaire :
- le retrait du guide de forage 14 hors du canon de guide 7,
- l'insertion de l'implant dans le canon de guidage 7 jusqu'à ce que l'extrémité distale de l'implant soit en butée contre la surface de butée du canon de butée 9.

Selon un aspect, l'invention concerne un kit comprenant le dispositif de guidage comprenant une pluralité de canon de butée et/ou une pluralité de canon de guidage et/ou une pluralité de guide de forage, et éventuellement au moins une plaque 22 et une bague de serrage 23 pour chaque canon de guidage.

Selon une possibilité, le dispositif de guidage, voir le kit, selon l'invention peut être virtualisé pour être utilisé par un dispositif de réalité augmentée permettant l'apprentissage, l'entrainement, ou l'assistance d'un praticien pour l'utilisation du dispositif de guidage, voir du kit, selon l'invention.

L'invention n'est pas limitée aux modes de réalisations précédemment décrits et s'étend à tous les modes de réalisation couverts par l'invention.

### Liste des Références

- 1.: Arbre
- 2.: Première branche distale
- 3.: Deuxième branche proximale
- 4.: Extrémité
- 5.: Extrémité
- 6.: Deuxième ouverture
- 7.: Canon de guidage
- 8.: Première ouverture
- 9.: Canon de butée
- 10.: Virole
- 11.: Embouchure
- 12.: Embouchure crantée
- 13.: Extrémité borgne
- 14.: Guide de forage
- 15.: Poignée
- 16.: Tige
- 17.: Doigt
- 18.: Rondelle
- 19.: Joint
- 20.: Bague
- 21.: Glissière
- 22.: Plaque d'appui extramaxillaire
- 23.: Bague de serrage
- 24.: Premier épaulement
- 25.: Deuxième épaulement
- 26.: Passage
- 27.: Dents
- 28.: Première portion
- 29.: Deuxième portion
- 30.: Butée proximale
- 31.: Manchon
- 32.: Première surface osseuse
- 33.: Deuxième surface osseuse
- 34.: Foret
- 35.: Première extension
- 36.: Deuxième extension
- 37.: Troisième extension
- L.: Axe longitudinal de l'arbre

## Revendications

1. Dispositif de guidage pour la pose d'implant dentaire comprenant un arbre (1) présentant un axe longitudinal (L), une première branche (2) distale et une deuxième branche (3) proximale comprenant chacune une base montée sur l'arbre (1),
**caractérisé en ce que**
• la première branche (2) distale comprend :
- à une extrémité (4) opposée à sa base une première ouverture (8) parallèle à l'axe longitudinal (L), et
- un canon de butée (9) inséré dans la première ouverture (6), le canon de butée (9) comprend un trou central qui présente une embouchure crantée (12) destinée à être appliquée contre une première surface osseuse (32), et une surface de butée opposée à l'embouchure crantée (12), le canon de butée (9) étant au moins configuré pour recevoir l'extrémité distale d'un foret (34),
• la deuxième branche (3) proximale comprend
- à une extrémité (5) opposée à sa base, une deuxième ouverture cylindrique (6) parallèle à l'axe longitudinal (L), et
- un canon de guidage (7) comprenant un trou central débouchant, le canon de guidage (7) étant monté mobile selon l'axe longitudinal (L) dans la deuxième ouverture cylindrique (6), le canon de guidage (7) comprenant une première embouchure comprenant une virole (10), et une deuxième embouchure (11) destinée à être appliquée contre une deuxième surface osseuse (33) le canon de guidage (7) étant au moins configuré pour recevoir un foret (34),
et dans lequel l'embouchure crantée (12) du canon de butée (9) et la deuxième embouchure (11) du canon de guidage (7) se font face et le trou central du canon de guidage (7) et le trou central du canon de butée (9) s'étendent suivant un même axe parallèle à l'axe longitudinal (L).

2. Dispositif selon la revendication précédente configuré pour faire varier l'écartement entre la première branche (2) et la deuxième branche (3).

3. Dispositif selon l'une quelconque des revendications précédentes dans lequel la première branche (2) distale est montée fixe par sa base sur l'arbre (1).

4. Dispositif selon l'une quelconque des revendications précédentes dans lequel la deuxième branche (3) proximale est montée en translation par sa base sur l'arbre (1).

5. Dispositif selon l'une quelconque des revendications précédentes comprenant un guide de forage (14) comprenant un trou central débouchant configuré pour s'insérer dans le trou central du canon de guidage (7) et destiné à recevoir le foret (34), le trou central du guide de forage (14) s'étend suivant un même axe que le trou central du canon de butée (9) et que le trou central débouchant du canon de guidage (7), qui est parallèle à l'axe longitudinal (L).

6. Dispositif selon l'une quelconque des revendications précédentes dans lequel la deuxième ouverture (6) comprend une surface interne comprenant un filet interne destiné à coopérer avec un filet externe agencé à la surface externe du canon de guidage (7) pour assurer un déplacement hélicoïdal du canon de guidage (7) dans la deuxième ouverture (6) de sorte que la deuxième embouchure (11) soit plus ou moins en saillie de la deuxième ouverture (6).

7. Dispositif selon l'une quelconque des revendications précédentes dans lequel la première branche (2) distale présente une première extension (35) comprenant une composante non nulle suivant une direction transversale à l'axe longitudinal (L).

8. Dispositif selon la revendication précédente dans lequel la première branche (2) distale comprend une deuxième extension (36) comprenant une composante non nulle suivant une direction transversale à l'axe longitudinal (L) et une composante non nulle suivant l'axe longitudinal (L), et avantageusement une troisième extension (37) s'étendant depuis la deuxième extension comprenant une composante non nulle suivant une direction transversale à l'axe longitudinal (L), préférentiellement la première extension (35) étant parallèle à la troisième extension (37).

9. Dispositif selon l'une quelconque des revendications précédentes dans lequel le canon de butée (9) comprend une première portion (28) d'un premier diamètre et une deuxième portion (29) d'un deuxième diamètre, le premier diamètre étant inférieur au deuxième diamètre, la première portion (28) étant destinée à s'insérer dans la première ouverture (8) de la première branche (2) et la deuxième portion (28) étant destinée à être agencée à l'extérieur de la première ouverture (8) de la première branche (2), la première portion (28) et la deuxième portion (29) étant reliées par une jonction configurée pour être en contact de la première branche (2).

10. Dispositif selon l'une quelconque des revendications précédentes dans lequel le canon de guidage (7) comprend un cylindre s'étendant entre la virole (10) et la deuxième embouchure (11) dont la longueur est configurée pour que la deuxième embouchure (11) et la virole (10) soient agencées de part et d'autre de la deuxième ouverture (6).

11. Dispositif selon l'une quelconque des revendications précédentes dans lequel le canon de guidage (7) comprend à sa deuxième embouchure (11) des dents (27) destinées à assurer un ancrage dans la deuxième surface osseuse (33).

12. Dispositif selon l'une quelconque des revendications précédentes comprenant une plaque d'appui extra maxillaire (22) comprenant un passage (26) configuré pour recevoir la deuxième embouchure (11) du canon de guidage (7) de sorte à assurer une surface d'appui plan sur la deuxième surface osseuse (33).

13. Dispositif selon la revendication précédente dans lequel la plaque d'appui extramaxillaire (22) comprend des dents destinées à assurer un ancrage dans la deuxième surface osseuse (33).

14. Dispositif selon l'une quelconque des deux revendications précédentes en combinaison avec l'une quelconque des revendications 1 à 10 comprenant une bague de protection (23) et dans lequel le canon de guidage (7) comprend à sa deuxième embouchure (11) un premier épaulement (24) d'un premier diamètre destiné à recevoir le passage (26) de la plaque d'appui extramaxillaire (22) et un deuxième épaulement (25) d'un deuxième diamètre destiné à recevoir la bague de protection (23), le premier diamètre étant supérieur au deuxième diamètre.
